(19) Europäisches Patentamt / European Patent Office / Office européen des brevets

(11) **EP 2 064 853 B1**

(12) **FASCICULE DE BREVET EUROPEEN**

(45) Date de publication et mention de la délivrance du brevet:
**05.10.2016 Bulletin 2016/40**

(21) Numéro de dépôt: **07820359.3**

(22) Date de dépôt: **19.09.2007**

(51) Int Cl.:
***H04L 12/70*** *(2013.01)*

(86) Numéro de dépôt international:
**PCT/EP2007/059915**

(87) Numéro de publication internationale:
**WO 2008/034851 (27.03.2008 Gazette 2008/13)**

(54) **PROCÉDÉ D'OPTIMISATION DU CONTRÔLE DU TRAFIC DANS UN RÉSEAU DE TÉLÉCOMMUNICATION PAR PAQUETS**

VERFAHREN FÜR OPTIMIERTE VERKEHRSKONTROLLE IN EINEM PAKETKOMMUNIKATIONSNETZ

METHOD FOR OPTIMISING TRAFFIC CONTROL IN A PACKET COMMUNICATION NETWORK

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **21.09.2006 FR 0653881**

(43) Date de publication de la demande:
**03.06.2009 Bulletin 2009/23**

(73) Titulaire: **InfoVista SAS**
**91940 Les Ulis (FR)**

(72) Inventeur: **GRIFFOUL, Frédéric**
**F-06110 Le Cannet (FR)**

(74) Mandataire: **Ilgart, Jean-Christophe et al**
**BREVALEX**
**95, rue d'Amsterdam**
**75378 Paris Cedex 8 (FR)**

(56) Documents cités:
**US-A1- 2005 005 024**

- **DUTTA D ET AL: "AN ACTIVE PROXY BASED ARCHITECTURE FOR TCP IN HETEROGENEOUS VARIABLE BANDWIDTH NETWORKS" GLOBECOM'01. 2001 IEEE GLOBAL TELECOMMUNICATIONS CONFERENCE. SAN ANTONIO, TX, NOV. 25 - 29, 2001, IEEE GLOBAL TELECOMMUNICATIONS CONFERENCE, NEW YORK, NY : IEEE, US, vol. VOL. 4 OF 6, 25 novembre 2001 (2001-11-25), pages 2316-2320, XP001060558 ISBN: 0-7803-7206-9**
- **BORDER HUGHES NETWORK SYSTEMS M KOJO UNIVERSITY OF HELSINKI J GRINER NASA GLENN RESEARCH CENTER G MONTENEGRO SUN MICROSYSTEMS J ET: "Performance Enhancing Proxies Intended to Mitigate Link-Related Degradations" IETF STANDARD, INTERNET ENGINEERING TASK FORCE, IETF, CH, juin 2001 (2001-06), XP015008916 ISSN: 0000-0003**
- **MEYER M ET AL: "PERFORMANCE EVALUATION OF A TCP PROXY IN WCDMA NETWORKS" IEEE WIRELESS COMMUNICATIONS, IEEE SERVICE CENTER, PISCATAWAY, NJ, US, vol. 10, no. 5, octobre 2003 (2003-10), pages 70-79, XP001186109 ISSN: 1536-1284**

**Description**

**DOMAINE TECHNIQUE**

L'invention se situe dans le domaine des télécommunications et concerne plus spécifiquement un procédé d'optimisation du contrôle du trafic dans un réseau de télécommunication par paquets comportant au moins un terminal émetteur, au moins un terminal récepteur, et un régulateur de trafic agencé entre le terminal émetteur et le terminal récepteur, lesdits terminaux émetteur et récepteur échangeant des segments de paquets de données via une liaison orientée connexion mettant en oeuvre un protocole de transport à accusé de réception.

L'invention concerne également un dispositif d'optimisation du contrôle du trafic dans un tel réseau de télécommunication, et une unité de traitement associée au régulateur de trafic dudit dispositif.

L'invention concerne également un programme produit pour ordinateur stocké sur ladite unité de traitement comportant des instructions pour mettre en oeuvre le procédé selon l'invention.

**ÉTAT DE LA TECHNIQUE ANTÉRIEURE**

Les protocoles orientés connexion connus, tels que TCP (pour Transmission Control Protocol) et SCTP (pour Stream Control Transport Protocol) par exemple, permettent un échange point à point garanti de données entre deux machines, ou terminaux. Ces protocoles assurent un transfert ordonné et sans perte de données, en marquant les octets avec un numéro de séquence et en fournissant un numéro d'accusé de réception explicite dans un en-tête standard.

Généralement, la détection de perte de segments s'effectue de deux manières : soit par expiration d'un délai prédéterminé sans qu'aucun accusé de réception n'ait été reçu par l'émetteur, soit par réception d'un nombre d'accusés de réception dupliqués consécutifs supérieur à un seuil critique prédéterminé. En cas de détection de perte, le ou les segments supposés perdus sont retransmis. Le délai de retransmission est calculé sur la base de l'estimation du temps de transfert noté RTT (pour round-trip time) d'un segment jusqu'au récepteur ajouté au temps de transfert de l'accusé de réception correspondant depuis le récepteur jusqu'à l'émetteur.

En outre, ces protocoles de transport fournissent des mécanismes de contrôle de flux et de congestion, fondés sur des fenêtres glissantes dynamiques.

L'objectif du contrôle de flux est d'empêcher une machine émettrice rapide de déborder la mémoire tampon d'une machine récepteur plus lente. Dans ce but, un récepteur fournit explicitement une taille de fenêtre de réception en octets dans l'en-tête protocolaire, qui sera notée rcv_wnd, (pour receiver window) dans la suite de cette description. Cette taille reflète la capacité de la mémoire tampon du récepteur allouée à la connexion pour absorber le transfert. Le protocole de transport utilisé requiert que l'émetteur ne transmette pas plus de rcv_wnd octets non acquittés afin d'éviter la perte de données par le récepteur.

En plus, un émetteur peut non seulement déborder la mémoire du récepteur, mais aussi saturer la capacité des mémoires tampons des noeuds intermédiaires dans le réseau, par exemple les routeurs IP (pour Internet Protocol). Dans ce cas, des données sont supprimées par ces noeuds intermédiaires. L'objectif du contrôle de congestion est de trouver un équilibre entre une utilisation trop abusive des ressources du réseau, qui conduit à des pertes importantes de données (et à de nombreuses retransmissions), et une sous-utilisation de ces ressources, qui garantit l'absence de pertes au détriment des performances de transfert du protocole.

Dans le cas particulier des réseaux TCP/IP, l'architecture de ces réseaux ne supporte pas une signalisation explicite de l'état des ressources du réseau aux terminaux, aussi, le protocole TCP, qui réside dans ces terminaux, utilise un algorithme d'estimation de ces ressources.

Dans les standards actuels, TCP a recours à la détection de pertes comme un signal implicite de congestion dans le réseau. L'émetteur TCP maintient une fenêtre de congestion, en octets, notée traditionnellement cwnd, qui estime le nombre d'octets non acquittés que l'émetteur peut injecter dans le réseau. La quantité optimale est le produit de la bande passante par le délai, BDP pour, « bandwidth delay product ».

L'algorithme de contrôle de congestion de TCP s'effectue en deux phases : initialement, l'émetteur sonde le réseau en augmentant sa fenêtre de congestion de la taille d'un segment pour chaque accusé de réception reçu, jusqu'à ce qu'un segment soit perdu. Cette première phase est qualifiée de « démarrage lent », (slow start), bien que l'augmentation de la fenêtre soit exponentielle. Ensuite, la seconde phase, dite d'évitement de congestion (congestion avoidance), voit la fenêtre oscillée autour d'une valeur d'équilibre, par une croissance modérée (linéaire) et des décroissances multiplicatives (la fenêtre est divisée par deux en cas de perte de segment).

Il faut noter que l'évolution dynamique de la fenêtre de congestion est complètement déterminée par le débit d'arrivée des accusés de réception, et donc est très sensible au RTT de la connexion. La fenêtre de transmission de l'émetteur est calculée comme le minimum des valeurs de cwnd et rcv_wnd.

Sur la base de cette fenêtre, l'émetteur transmet des segments à sa couche IP : si les données sont disponibles, et si la fenêtre est suffisante, plusieurs segments sont envoyés simultanément, c'est-à-dire l'un à la suite de l'autre. On parle d'émission en rafales (« burst ») caractéristique des transferts TCP.

Bien que le contrôle de congestion de TCP soit considéré comme la pierre angulaire de la stabilité du réseau Internet, son efficacité est reconnue comme sous optimale dans un certain nombre d'environnements, en particulier les réseaux exhibant un BDP élevé, dû par exemple à un RTT important. En outre, l'utilisation de pertes comme signal implicite de congestion pose problème pour des réseaux avec un taux d'erreur élevé comme les réseaux sans fil.

Enfin certaines applications ont des caractéristiques qui interagissent mal avec TCP : c'est le cas des transactions très courtes, qui ne parviennent pas à atteindre l'état d'équilibre de la fenêtre de congestion par manque de paquets à transmettre, et qui souffre d'un temps de latence plus élevé que nécessaire en raison de la phase de « slow start ». De telles applications transportées sur des réseaux avec un BDP important souffrent de performances très faibles, mais l'ubiquité des réseaux TCP/IP les rend incontournables.

Dans les architectures de l'art antérieur munies d'un régulateur de trafic, ce dernier est en général, constitué d'une ou plusieurs unités physiques déployées à la frontière entre deux réseaux de caractéristiques très différentes, par exemple à la bordure entre des réseaux locaux haut débit et un accès à un réseau longue distance (WAN) comme un réseau à relais de trame (Frame Relay), un réseau ATM ou MPLS (Multiprotocol Label Switching), ou bien encore au niveau d'un point d'accès ou d'une station de base qui interconnecte un réseau sans fil (Wifi ou Wimax,) et un réseau filaire. La régulation de trafic a pour but de lisser le trafic en fonction de caractéristiques spécifiques d'accès au réseau ou en fonction d'une configuration du réseau respectant un contrat de Qualité de Service (QoS) avec les utilisateurs du réseau. La régulation de trafic peut par exemple permettre de garantir une allocation d'une partie de la bande passante disponible entre différentes classes de trafic, et d'arbitrer les transmissions de paquets simultanées entre des flux de ces classes de trafic. Un lissage permet de limiter un flux à un débit configuré, mesuré en nombre de paquets par seconde ou en nombre d'octets ou de bits transmis par seconde : les paquets sont transmis plus ou moins strictement en fonction du débit configuré, ce qui peut réduire notablement l'émission de rafales continues de paquets. Les procédés de lissage de trafic sont typiquement fondés sur l'algorithme de seau à jeton, et l'ordonnancement des paquets est réalisé par des disciplines de service spécifique de file d'attente de paquets.

Dans les réseaux utilisant le protocole TCP, la régulation du trafic réduit considérablement les rafales continues de paquets, qui sont inhérentes au mécanisme de transmission standard de TCP. Les paquets sont transmis en continu l'un après l'autre par TCP, suivant son mécanisme de contrôle de trafic par fenêtre glissante. Le lissage de trafic introduit un délai déterminé entre chaque paquet émis, et espace ainsi les paquets trop proches les uns des autres, en fonction du débit d'émission alloué par le régulateur.

Ceci permet de réduire la probabilité dé pertes de paquets dans les noeuds intermédiaires, notamment les routeurs IP, puisque les mémoires tampons des routeurs ont moins de rafales continues de paquets à absorber, ce qui réduit la probabilité de débordement de ces tampons mémoire.

En outre, si l'émission des segments de données d'une connexion TCP dépasse le débit alloué par le régulateur de trafic, ces paquets sont retardés par ce régulateur. Ce retard augmente le RTT, qui est calculé par connexion, ce qui va ralentir la transmission de segments par l'émetteur TCP, puisque ce dernier recevra les accusés de réception avec plus de retard.

Cependant, la régulation de trafic seule ne permet pas de contrôler l'augmentation de la taille de la fenêtre de congestion de l'émetteur TCP. Puisque le lissage de trafic réduit la probabilité de pertes dans le réseau en aval du régulateur, la taille de la fenêtre de congestion de l'émetteur sera même plus importante qu'en l'absence de régulateur. Par conséquent, l'émetteur transmet des rafales de taille plus importante, ce qui va entraîner l'augmentation de la taille des files d'attente dans le régulateur, voire des débordements de mémoire dans les noeuds intermédiaires en amont du régulateur. Par conséquent, bien que le lissage de trafic améliore la performance du réseau en aval du régulateur, il peut conduire à une dégradation de la performance de TCP, due à des pertes en amont du régulateur ou dans le régulateur lui-même Du fait qu'un régulateur de trafic peut contrôler l'intervalle de temps entre les émissions d'une source TCP, en ralentissant les paquets de données, mais ne permet pas pour autant de contrôler la taille (en nombre d'octets) des rafales émises par la source.

Enfin, un régulateur de trafic ne permet pas de résoudre l'inefficacité de TCP dans sa phase de « démarrage lent ». Par conséquent, même si le régulateur maîtrise le débit d'émission d'une connexion, il ne peut pas implicitement gérer le mécanisme de contrôle de congestion sans introduire de pertes de paquets.

Le document US 2005/005024 A1 décrit un Performance Enhancement Proxy (PEP) utilisant le MTU d'un segment de communication pour optimiser le débit d'un émetteur TCP au travers des champs « advertised receive window » d'un ACK anticipé.

Le but de l'invention est pallier les inconvénients de l'art antérieur décrits ci-dessus.

Plus spécifiquement, l'invention a pour but d'optimiser l'interaction des algorithmes de protocoles de transport orientés connexion avec une infrastructure réseau qui fournit une régulation du trafic, soit au niveau de la couche liaison de données (niveau 2) soit au niveau de la couche réseau (niveau 3) c'est-à-dire IP afin de lisser de façon optimale le trafic entre deux terminaux dans un réseau de télécommunication.

## EXPOSÉ DE L'INVENTION

A cet effet, l'invention préconise un procédé d'optimisation du contrôle du trafic dans un réseau de télécommunication par paquets comportant au moins un terminal émetteur, au moins un terminal récepteur, et un régulateur de trafic agencé entre le terminal émetteur et le terminal récepteur, lesdits terminaux émetteur et récepteur échangeant des segments de paquets de données via une liaison orientée connexion mettant en oeuvre un protocole de transport à accusé de réception.

Selon l'invention, ce procédé comporte les étapes suivantes :

lorsqu'une connexion est établie entre le terminal émetteur et le terminal récepteur, les segments de paquets émis du terminal émetteur vers le terminal récepteur sont interceptés au niveau du régulateur de trafic, un accusé de réception anticipé $ACK_a$ est généré pour simuler la réception desdits segments de paquets par le terminal récepteur lorsque le régulateur de trafic transmet les paquets interceptés audit terminal récepteur, ensuite,

- ledit accusé de réception anticipé $ACK_a$ est transmis au terminal émetteur de manière à asservir le débit d'émission des segments de paquets par le terminal émetteur à un débit fixé par ledit régulateur de trafic; le procédé comportant en outre les étapes consistant à :
- estimer la valeur BDP représentant le produit de la bande passante disponible par le délai (RTT, Round-Trip Time) de transfert des segments de paquets entre le régulateur de trafic et le terminal récepteur,
- calculer la valeur adv_wnd représentant la fenêtre optimale de réception par le terminal récepteur des segments de paquets émis par le terminal émetteur au moyen de la formule suivante :

$$\text{adv\_wnd} = \min(\text{rcv\_wnd} - \text{pipe\_size}, \text{bdp\_estim})$$

où,

- rcv_wnd représente une fenêtre de réception imposée par le terminal récepteur,
- pipe_size représente le nombre d'octets non encore acquittés par le
- terminal récepteur, ou une estimation de ce nombre.
- bdp_estim représente la valeur estimée du produit BDP.

- transmettre au terminal émetteur la valeur adv_wnd calculée de manière à contrôler la longueur des rafales émises par ledit terminal émetteur.

Le caractère anticipé de l'accusé de réception $ACK_a$ provient du fait qu'il est généré avant que les segments de paquets ne soient reçus par le terminal récepteur.

Selon l'invention, ledit accusé de réception anticipé $ACK_a$ est généré par une unité de traitement associée audit régulateur de trafic et présente un format de donnée conforme au protocole de transport mis en oeuvre pour la transmission de données entre le terminal émetteur et le terminal récepteur.

Le procédé selon l'invention comporte en outre une étape consistant à transmettre un acquittement dupliqué $ACK_d$ au terminal émetteur identique à l'acquittement précédemment émis si au moins un segment de paquets n'est pas reçu à sa position dans le flux de données, conformément à l'ordonnancement des paquets utilisé dans le protocole de transmission mis en oeuvre entre le terminal émetteur et le terminal récepteur.

Dans un mode préféré de réalisation, le procédé selon l'invention comporte en outre les étapes suivantes :

- intercepter les acquittements $ACK_r$ renvoyés du terminal récepteur vers le terminal émetteur,
- filtrer les acquittements $ACK_r$ interceptés de manière à supprimer les acquittements qui apparaîtraient au terminal émetteur comme des acquittements dupliqués d'un $ACK_a$ précédemment envoyés par l'unité de traitement,
- déduire à partir desdits acquittements $ACK_r$ les segments non délivrés.

Selon une autre caractéristique de l'invention, les en-têtes des acquittements $ACK_r$ non supprimés sont modifiés par l'unité de traitement, pour transmettre au terminal émetteur la valeur adv_wnd représentant la fenêtre optimale de réception par le terminal récepteur des segments de paquets émis par le terminal émetteur.

Ceci permet de contrôler le débit transmission et la taille des rafales émises par le terminal émetteur.

La retransmission des segments de paquets non délivrés est effectuée soit après réception d'un nombre d'acquittements dupliqués supérieur à un seuil critique prédéfini, soit à la suite de l'expiration d'un délai de retransmission prédéfini.

Selon l'invention, cette retransmission s'effectue sous le contrôle du régulateur de trafic, et l'émission des paquets retransmis vers le terminal récepteur s'effectue selon le débit d'émission fixé par ce régulateur de trafic.

Le procédé selon l'invention est mis en oeuvre par un dispositif comportant au moins un terminal émetteur, au moins un terminal récepteur, et un régulateur de trafic agencé entre le terminal émetteur et le terminal récepteur, lesdits terminaux émetteur et récepteur échangeant des segments de paquets de données via une liaison orientée connexion mettant en oeuvre un protocole de transport à accusé de réception.

Selon l'invention, le régulateur est couplé à une unité de traitement comportant des moyens pour générer un accusé de réception anticipé $ACK_a$ configuré pour simuler la réception des segments de paquets par le terminal à l'émission d'un paquet par ledit régulateur de trafic.

L'unité de traitement est une unité à états comportant une mémoire pour stocker une structure de contrôle par connexion, l'état de la connexion, les paramètres de ladite connexion et la file de retransmission des segments de paquets non encore acquittés par le terminal récepteur.

Dans une application particulière, les terminaux émetteur et récepteur communiquent selon le protocole de transmission TCP et l'unité de traitement comporte un module supportant les mécanismes de détection d'erreur et de retransmission du protocole TCP.

En outre, ladite unité de traitement comporte :

- des moyens pour estimer la valeur BDP représentant le produit de la bande passante disponible par le délai (RTT, Round-Trip Time) de transfert des segments de paquets entre le régulateur de trafic et le terminal récepteur,
- des moyens pour calculer la valeur adv_wnd représentant la fenêtre optimale de réception par le terminal récepteur des segments de paquets émis par le terminal émetteur au moyen de la formule suivante :

$$\texttt{adv\_wnd = min(rcv\_wnd - pipe\_size, bdp\_estim)}$$

où,

- rcv_wnd représente une fenêtre de réception imposée par le terminal récepteur,
- pipe_size représente le nombre d'octets non encore acquittés par le terminal récepteur, ou une estimation de ce nombre.
- bdp_estim représente la valeur estimée du produit BDP.

- des moyens pour transmettre au terminal émetteur la valeur adv_wnd calculée de manière à contrôler la longueur des rafales émises par ledit terminal émetteur.

L'unité de traitement comporte en outre :

- des moyens pour intercepter les acquittements $ACK_r$ renvoyés du terminal récepteur vers le terminal émetteur,
- des moyens pour déduire à partir desdits acquittements $ACK_r$ les segments non délivrés,
- des moyens pour filtrer les acquittements $ACK_r$ de manière à supprimer les acquittements qui apparaîtraient au terminal émetteur comme des acquittements dupliqués d'un $ACK_a$ précédemment envoyés par l'unité de traitement.

L'unité de traitement comporte également des moyens pour modifier les en-têtes des acquittements $ACK_r$ non supprimés de manière à contrôler le débit de transmission et la taille des rafales émises par le terminal émetteur.

Le procédé selon l'invention est mis en oeuvre par un programme produit pour ordinateur 3 stocké sur une unité de traitement associée à un régulateur de trafic dans un réseau de télécommunication par paquets comportant au moins un terminal émetteur, au moins un terminal récepteur, ledit régulateur de trafic étant agencé entre le terminal émetteur et le terminal récepteur, lesdits terminaux émetteur et récepteur échangeant des segments de paquets de données via une liaison orientée connexion mettant en oeuvre un protocole de transport à accusé de réception.

Ledit programme produit pour ordinateur comporte des instructions pour générer un accusé de réception anticipé $ACK_a$ simulant la réception desdits segments de paquets par le terminal récepteur, à l'émission desdits segments de paquets par le régulateur de trafic.

Le programme produit pour ordinateur selon l'invention comporte en outre :

- des instructions pour intercepter les acquittements $ACK_r$ renvoyés du terminal récepteur vers le terminal émetteur,
- des instructions pour déduire à partir des acquittements $ACK_r$ intercéptés les segments non délivrés,

- des instructions pour filtrer les acquittements $ACK_r$ de manière supprimer les acquittements qui apparaîtraient au terminal émetteur comme des acquittements dupliqués d'un $ACK_a$ précédemment envoyés par l'unité de traitement.

Préférentiellement, ce programme produit pour ordinateur comporte en outre des instructions pour modifier les en-têtes des acquittements $ACK_r$ non supprimés pour transmettre au terminal émetteur une valeur adv_wnd représentant la fenêtre optimale de réception par le terminal récepteur des segments de paquets émis par le terminal émetteur de manière à contrôler le débit transmission et la taille des rafales émises par ledit terminal émetteur.

## BRÈVE DESCRIPTION DES DESSINS

D'autres caractéristiques et avantages de l'invention ressortiront de la description qui va suivre, prise à titre d'exemple non limitatif, par référence aux figures annexées dans lesquelles :

- la figure 1, illustre schématiquement un dispositif dans lequel est mis en oeuvre le procédé selon l'invention ;
- la figure 2 représente une vue détaillée d'une unité de gestion d'accusé réception selon l'invention ;
- les figures 3 à 5 illustrent schématiquement les chemins de flux échangés entre un terminal émetteur et un terminal récepteur via le dispositif de la figure 1,
- la figure 6 représente un organigramme illustrant la régulation du trafic selon le procédé de l'invention ;
- la figure 7 représente un organigramme illustrant le traitement d'un flux amont (entre l'unité de traitement et l'émetteur) selon le procédé de l'invention ;
- la figure 8 représente un organigramme illustrant le traitement d'un flux aval (entre le récepteur et l'unité de traitement) selon le procédé de l'invention ;
- la figure 9 représente un organigramme illustrant la gestion de la retransmission d'un flux selon le procédé de l'invention.

## EXPOSÉ DÉTAILLÉ DE MODES DE RÉALISATION PARTICULIERS

L'invention sera décrite, à titre d'exemple d', dans une application du procédé à une liaison TCP (pour Control Transmission Protocol) entre un émetteur 2 et un récepteur 4 dans un réseau de télécommunication. Notons cependant que le procédé s'applique, sans sortir du cadre de l'invention, quel que soit le type de protocole de transmission utilisé entre l'émetteur 2 et le récepteur 4. Pour plus de clarté on désignera par émetteur la machine distante qui transmet des segments de données et récepteur une autre machine connectée à l'émetteur et qui transmet en retour uniquement des segments d'accusé de réception, ou « ACK » audit émetteur.

Notons qu'une même machine peut être simultanément un émetteur et un récepteur pour une même connexion.

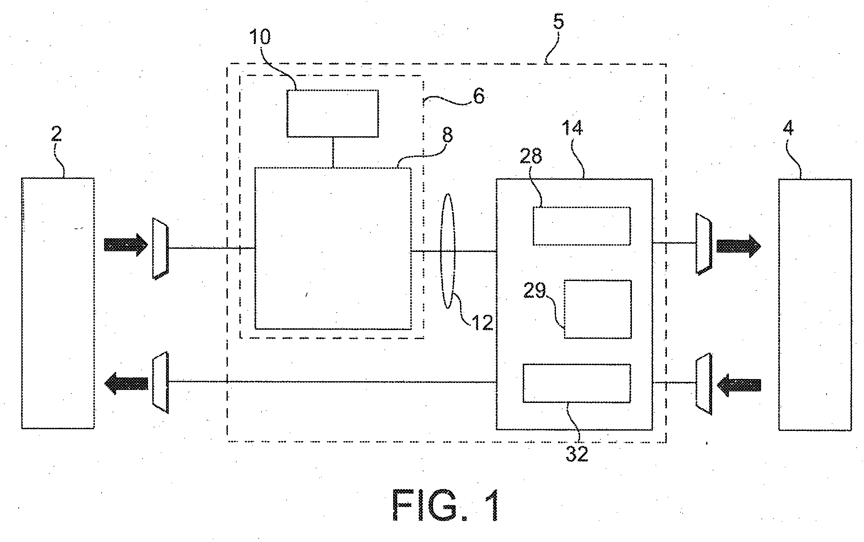

La figure 1 illustre une liaison entre l'émetteur 2 et le récepteur 4 via un dispositif 5 d'optimisation du contrôle du trafic.

On désignera par « réseau amont » la partie du réseau entre l'émetteur 2 et le dispositif 5, et par « réseau aval » la partie entre dispositif 5 et le récepteur 4. De même, un segment (resp. paquet) amont est un segment (resp. paquet) transporté de la partie amont du réseau, donc de l'émetteur 2, vers la partie « aval », donc vers le récepteur 4, un segment (resp. paquet) « aval » est un segment (resp. paquet) transporté de la partie « aval » du réseau, donc du récepteur 4, vers la partie « amont », donc vers l'émetteur 2.

Le dispositif 5 peut interagir avec les terminaux 2 et 4 quel que soit le format de réception et de transmission des paquets sur les interfaces d'entrée/sortie « amont et aval ». Il peut ainsi agir au niveau de la couche 2 (MAC, pour Medium Access Control) ou/et de la couche 3 (IP, pour Internet Protocol) et au-delà, sans sortir du cadre de l'invention. Un tel dispositif peut être centralisé, c'est-à-dire, constitué par un seul élément physique, comme un adaptateur réseau, un pont filtrant, un commutateur, un routeur, un point d'accès ou une station de base sans fil, ou d'un élément programme produit pour ordinateur comme un pilote de périphérique opérant sur un hôte TCP.

Alternativement, le dispositif peut être distribué sur plusieurs éléments de réseaux physiques.

Par référence à la figure 1, le dispositif 5 comporte un régulateur de trafic 6 comportant ordonnanceur de paquets 8 et à un module contrôle 10. Le régulateur de trafic 6 est relié, via une interface de communication 12, à une unité de traitement 14 comportant des moyens pour générer un accusé de réception anticipé $ACK_a$ simulant la réception par le terminal récepteur 4 des segments de paquets émis par le terminal émetteur 2, lorsque le régulateur de trafic 6 émet des segments de paquets vers le terminal récepteur 4.

Le module contrôle 10 a pour fonction d'adapter dynamiquement les paramètres du régulateur de trafic 6 en fonction d'une politique de gestion de trafic établi dans une unité de réseau externe ou des conditions perçues du réseau.

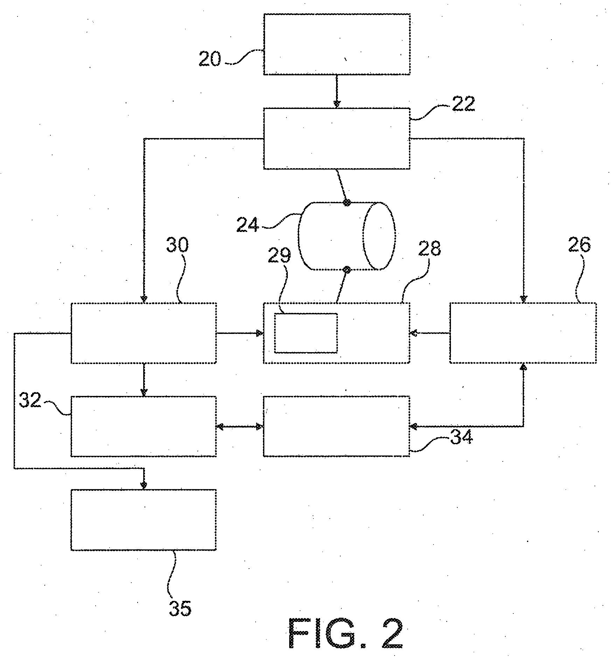

La figure 2 représente en détail l'unité de traitement 14.

Préférentiellement, cette dernière comporte :

- un démultiplexeur de segment 20 destiné à extraire les informations nécessaires des en-têtes TCP et IP du paquet reçu, que ce soit une trame de niveau 2 (couche liaison de données) ou d'un datagramme IP de niveau 3, et optionnellement, à réassembler les paquets IP fragmentés pour disposer de la totalité des segments TCP ;
- un gestionnaire des étapes de contrôle 22.

Pour chaque connexion, l'état courant est stocké dans une mémoire 24 sous la forme d'une structure, appelée étape de contrôle, avec la file d'attente des segments non acquittés, et tout autre information nécessaire pour réaliser la détection de pertes et la retransmission conformément aux standards TCP.

Le gestionnaire des étapes de contrôle 22 est destiné à créer, retrouver et détruire les étapes de contrôle dans cette mémoire 24. L'association entre une connexion et l'adresse mémoire du contrôle correspondant peut s'effectuer au moyen de structure de données appropriées comme un arbre balancé ou une table de hachage. L'identifiant d'une étape de contrôle peut être soit un « tag » de niveau 2 soit le quadruplet < adresse source IP, adresse destination IP, port source TCP, port destination TCP > extrait des en-têtes TCP et IP ;

L'unité 14 comporte en outre un premier filtre 26 pour filtrer les segments amont. Ce composant n'est utilisé que dans le traitement des segments émis par le terminal émetteur vers le terminal récepteur. Il fournit diverses vérifications sur l'en-tête et le segment TCP extrait par le démultiplexeur 20. En particulier, ce filtre vérifie si le segment TCP transporte des données ou non. Si non, le segment est un acquittement pur, qui ne doit pas être acquitté à son tour, et ce segment peut être ignoré par l'unité de traitement 14, puis transmis vers le terminal récepteur 4. Ce filtre 26 vérifie également si la somme de contrôle (checksum) du segment TCP est valide ou non. Si non, le segment est supprimé. Il vérifie en outre si le segment est dupliqué ou non, c'est-à-dire si le segment est une retransmission du terminal émetteur 2. Si oui, le segment est supprimé.

Dans tous les autres cas, le segment est passé à un gestionnaire de file de retransmission 28 pour la suite du traitement amont.

L'unité 14 comporte en outre une mémoire tampon 29 associée au gestionnaire de file de retransmission 28. Ce composant fournit le coeur du mécanisme TCP de détection d'erreur et de retransmission, en ne considérant aucun mécanisme de contrôle de congestion de TCP. En effet, comme l'unité de traitement 14 émet des acquittements anticipés vers l'émetteur 2, la responsabilité de la livraison correcte et ordonnée des segments acquittés incombe au gestionnaire de file de retransmission 28.

Pour les segments amont ce composant conserve une copie de chaque segment transmis dans une file de segments, ordonnée suivant les numéros de séquence des octets des segments.

Pour les segments aval le numéro d'accusé de réception cumulatif indique les segments correctement reçus par le terminal récepteur : les copies de ces segments maintenus dans la file de retransmission peuvent être supprimées sans risque. L'algorithme de détection d'erreur doit être conforme au standard TCP pour que l'unité de traitement 14 soit compatible avec l'implantation de TCP sur le terminal récepteur. Un ou plusieurs segments sont retransmis soit par la procédure dite de recouvrement rapide (« Fast Recovery ») spécifiée pour les variantes « Reno » de TCP, c'est-à-dire lorsque le nombre d'acquittements dupliqués consécutifs atteint un seuil critique prédéfini, généralement trois, soit par la procédure de recouvrement d'acquittement sélectif spécifiée pour les variantes « SACK » de TCP, soit par la procédure d'expiration d'une, minuterie de retransmission. Pour cette dernière procédure, le gestionnaire 28 doit estimer le RTT de chaque connexion pour évaluer une durée de la minuterie qui ne soit ni trop courte ni trop longue, par exemple conformément à l'algorithme standard d'échantillonnage de TCP.

Lorsque des segments doivent être retransmis, ils sont placés sous le contrôle du régulateur de trafic 6.Pour éviter tout effet de bord de retransmissions cachées (par exemple une sous-estimation importante du trafic circulant vers le terminal récepteur), le gestionnaire de file de retransmission 28 dispose d'une interface avec le régulateur de trafic 6. Par exemple, si régulateur de trafic 6 comporte des files d'attente par classe de trafic, le gestionnaire de retransmission 28 place les segments retransmis en tête de la file d'attente correspondante, contrairement aux nouveaux paquets à transmettre qui sont placés en fin de file.

L'unité 14 comporte en outre un deuxième filtre 30 dédié aux segments aval. Ce composant n'est utilisé que dans le traitement des segments émis par le terminal récepteur 4 vers le terminal émetteur 2. Il fournit diverses vérifications sur l'en-tête et le segment TCP extrait par le démultiplexeur 20. En particulier, ce filtre vérifie si le bit d'acquittement (ACK) est positionné ou non. Si non, le segment est ignoré. Il vérifie également si la somme de contrôle du segment TCP est valide ou non. Si non, le segment est supprimé.

Dans tous les autres cas, le segment est passé au gestionnaire de file de retransmission 28 pour la suite du traitement aval.

L'unité 14 comporte également un générateur d'acquittement anticipé 32 qui génère des segments contenant uniquement un accusé de réception vers le terminal émetteur 2, suite au traitement des paquets amont. Si le paquet intercepté contient un segment TCP qui n'est pas celui attendu dans l'ordre des numéros de séquence, le générateur d'acquittement anticipé 32 émet un acquittement dupliqué, c'est-à-dire le même acquittement que précédemment. Ce générateur 32 doit donc stocker un acquittement dans le contrôle de l'étape de la connexion, ainsi que le numéro de séquence du prochain segment attendu. Si le paquet intercepté est celui attendu, le générateur d'acquittement anticipé 32 construit un acquittement de telle sorte qu'il apparaisse comme émis par le terminal récepteur 4 vers le terminal émetteur 2. En particulier, les adresses IP et les ports TCP doivent être inversés par rapport au paquet intercepté. Le numéro de séquence de l'acquittement est positionné à la valeur du numéro d'accusé de réception du paquet intercepté. Le numéro d'accusé de réception est positionné au numéro de séquence du paquet intercepté augmenté de la longueur des données TCP du paquet (i.e. la taille de sa charge utile). Enfin, la fenêtre de réception est positionnée conformément à la formule :

$$\texttt{adv\_wnd = min(rcv\_wnd - pipe\_size, bdp\_estim)}$$

où,

- rcv_wnd représente une fenêtre de réception imposée par le terminal récepteur,
- pipe_size représente le nombre d'octets non encore acquittés par le terminal récepteur, ou une estimation de ce nombre.
- bdp_estim représente la valeur estimée du produit BDP.

Pour les paquets aval, un générateur d'acquittement anticipé 32 filtre les acquittements purs : si un acquittement pur du terminal émetteur 2 vers le terminal récepteur ne conduit à aucun changement de taille de fenêtre, et n'a aucun des bits SYN, RST ou FIN positionné dans son en-tête, le paquet peut être silencieusement supprimé. Dans les cas contraires, et si un segment du terminal émetteur 2 vers le terminal récepteur 4 contient des données, le composant altère l'en-tête TCP du segment en :

- Modifiant le numéro d'accusé de réception pour placer le dernier numéro émis dans un acquittement anticipé vers le terminal émetteur 2. Sans cette modification, le segment pourrait être ignoré comme « trop vieux » par le terminal émetteur 2, c'est-à-dire que le numéro d'accusé de réception se trouve avant le bord gauche de sa fenêtre, ou encore le segment pourrait être considéré comme un acquittement dupliqué entraînant des retransmissions superflues.

- Modifiant la fenêtre de réception, conformément à la formule ci-dessus.

- Fixant la somme de contrôle du segment pour tenir compte des deux modifications précédentes.

Notons que, compte tenu de l'algorithme de calcul, la somme peut être fixée de façon incrémentale, sans la recalculer sur la totalité du segment TCP.

L'unité 14 comporte en plus un échantillonneur de BDP 34. Ce composant estime le BDP de chaque connexion à partir de l'échantillonnage du RTT nécessaire au mécanisme de retransmission. Si le régulateur 6 fournit une gestion de file par connexion TCP et offre une interface pour connaître le débit configuré pour chaque file, le BDP peut être échantillonné en multipliant directement le débit de la file de la connexion par le RTT de la connexion. On suppose alors que le débit dans la partie « aval » du réseau est entièrement contraint par le débit du régulateur. Si un tel calcul n'est pas possible, le BDP peut être échantillonné en mesurant la longueur de la file de retransmission, en octets. Un numéro de séquence dédié est maintenu dans l'étape de contrôle, et la taille maximale de la file de retransmission est mesurée jusqu'à ce que ce numéro de séquence soit acquitté par un accusé de réception du terminal émetteur 2. Le BDP peut alors être estimé comme une moyenne de ces échantillons. Une telle procédure est similaire à l'échantillonnage standard du RTT en l'absence d'option de « Timestamp ».

L'unité 14 comporte aussi un module de fragmentation des segments TCP 36 dont la fonction sera décrite ci-après.

Un problème particulier dans le cas d'une application du procédé selon l'invention dans un réseau IP est le support de la découverte du MTU (pour Maximum Transmit Unit, représentant la taille maximale (en octets) du paquet pouvant être transmis en une seule fois).

Selon le standard actuel les routeurs intermédiaires entre deux machines implantant le protocole TCP suppriment un paquet IP dont la taille excède la taille maximale autorisée sur une interface (MTU) et dont le drapeau « Dont fragment » de l'en-tête IP est présent. En outre, le routeur émet vers la source un message ICMP (pour Internet Control Message Protocol) contenant la valeur du MTU sur l'interface considérée.

Si un tel routeur se situe en aval de l'unité de traitement 14, l'émetteur 2 recevra un ou plusieurs acquittements anticipés pour des segments qui seront par la suite supprimés par le routeur.

En effet, si l'unité fonctionne au niveau IP, et si le MTU est fixé dynamiquement dans le réseau, l'unité de traitement 14 peut anticiper un acquittement pour des segments qui seront supprimés par un routeur en aval, avec émission d'un paquet ICMP (pour Internet Control Message Protocol) spécifiant la valeur du MTU sur le chemin considéré. Ce paquet ICMP doit parvenir au terminal émetteur 2, qui transmettra par la suite des paquets à la taille adaptée.

Cependant si l'unité de traitement 14 n'intercepte pas aussi ce paquet ICMP, la procédure de retransmission conduit à la réémission des paquets supprimés par le routeur sans tenir compte du MTU : ainsi les retransmissions seront à nouveau supprimées par le routeur, et ne parviendront jamais au terminal récepteur 4. Le module de fragmentation des segments TCP 36 est donc responsable de l'interception des paquets ICMP indiquant un MTU dynamique, et de la fragmentation des segments acquittés conformément au MTU renvoyé par le routeur en aval. Ces segments sont alors immédiatement retransmis vers le terminal récepteur 4 par le gestionnaire de retransmission 28.

Selon une caractéristique de l'invention, l'unité de traitement 14 intercepte les messages ICMP de type « path mtu discovery » pour retransmettre les segments perdus des connexions impactées, en fragmentant ces segments à la taille du MTU fourni (et ce, même si les paquets IP ont le drapeau « Dont Fragment » positionné). Ensuite tant que l'émetteur 2 n'a pas été informé par le message ICMP, l'unité de traitement 14 fragmente les segments acquittés localement.

Afin de supporter le protocole TCP, l'unité de traitement 14 comporte les interfaces logiques suivantes :

- TS_requeue (TS_queue q, TS_packet p) : destinée à insérer les paramètres des paquets au début de la file d'attente des paquets à transmettre au terminal récepteur 4.

- TS_rate (TS_queue q): Cette interface est optionnelle et est destinée à retourner le débit courant de transmission des paramètres de file d'attente,

- TS_availspace (TS_queue q): Cette interface est optionnelle et est destinée à retourner la quantité disponible de la mémoire tampon de la file d'attente. Notons que cette interface n'est pas nécessaire si le système est distribué entre différents dispositifs physiques, en particulier si le régulateur de trafic 6 et l'unité de traitement 14 sont intégrés dans des dispositifs de réseaux différents.

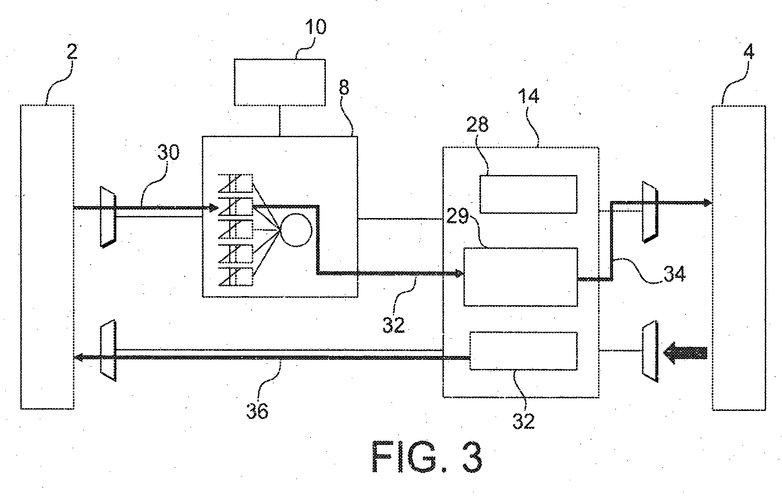

Les différentes phases du procédé selon l'invention seront maintenant décrites par référence aux figures 3, 4 et 5.

La figure 3 illustre schématiquement le traitement des segments de paquets d'un flux amont émis par le terminal émetteur 2.

Ces segments sont d'abord interceptés par le régulateur de trafic 6, qui les classe et les range dans une mémoire tampon appropriée (flèche 30).

Le régulateur de trafic 6 sélectionne ensuite le segment à transmettre au récepteur 4 et le délivre à l'unité de traitement 14 (flèche 32). Le segment est ensuite transmis sans délai et sans modification au terminal récepteur 4 via le réseau aval (flèche 34).

Si le segment TCP transporte des données utiles, l'unité de traitement 14 génère un accusé de réception $ACK_a$ qu'elle transmet (flèche 36) au terminal émetteur 2.

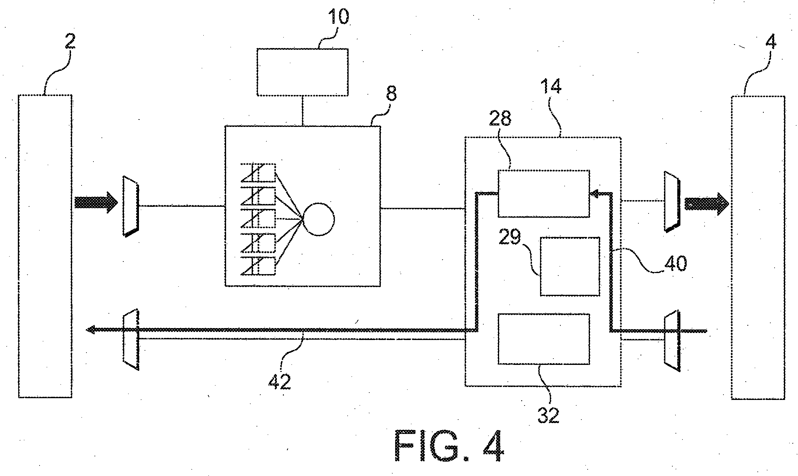

La figure 4 illustre schématiquement le traitement des segments de paquets d'un flux aval émis par le terminal récepteur 4.

Ces derniers sont d'abord interceptés par l'unité de traitement 14 (flèche 40) qui les filtre, modifie les en-têtes des paquets non supprimés puis transmet ces paquets (flèche 42) au terminal émetteur 2 avec la valeur adv_wnd.

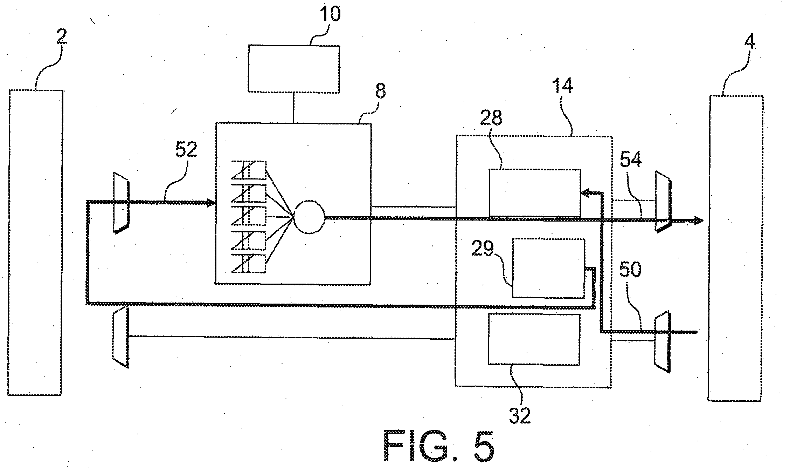

La figure 5 illustre schématiquement la retransmission de paquets au terminal récepteur 4.

Notons qu'une retransmission est effectuée soit après réception par l'unité de traitement 14 d'un nombre d'acquittements dupliqués supérieur à un seuil critique prédéfini, soit à la suite de l'expiration d'un délai de retransmission prédéfini.

Lorsque l'unité de traitement 14 reçoit un accusé de réception dupliqué supérieur à un seuil critique (flèche 50), ou à la suite de l'expiration du délai de retransmission prédéfini, le module de gestion des retransmissions 28 de l'unité 14 sélectionne un ou plusieurs segments qui doivent être retransmis. Cette procédure sera décrite en détail dans la suite de la description.

Un segment qui doit être retransmis est renvoyé à l'entrée du régulateur de trafic 6 (flèche 52) qui le positionne en tête de la mémoire tampon de retransmission. Lorsque le segment est sélectionné par l'ordonnanceur de paquets 8 du régulateur de trafic 6, il est directement fourni à l'interface du réseau aval sans traitement supplémentaire dans l'unité de traitement 14 (flèche 54).

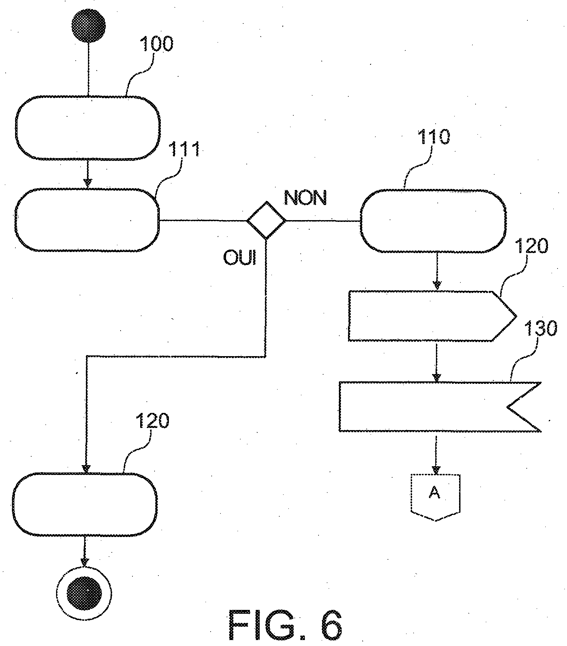

Les différents traitements des segments amont et aval réalisés en application du procédé de l'invention vont maintenant être décrits par référence aux figures 6 à 9.

TRAITEMENT DES PAQUETS AMONT

Les étapes du traitement des segments amont sont décrites ci-après par référence à la figure 6.

A l'étape 100, le régulateur de trafic effectue une classification des flux reçus du terminal émetteur 2. Cette classification consiste à trier les paquets en flux de trafic prédéfinis et à appliquer à chaque flux un traitement particulier. Ainsi par exemple, une partie de la bande passante disponible peut avoir été réservée pour un flux, ou bien un flux peut être soumis à une contrainte de délai ou de gigue. Les paramètres utilisés pour la classification dépendent du niveau de traitement du régulateur de trafic 6. En effet, si le régulateur 6 est lié à la couche liaison de données (niveau 2), un simple identifiant de circuit virtuel ou de canal peut suffire, par contre, si ce régulateur 6 agit au niveau IP, la classification peut utiliser une combinaison de champs de l'en-tête IP, voire de l'en-tête TCP ou UDP, ou même le contenu applicatif du paquet (niveau 7).

En général, la classification a pour effet de placer le paquet dans une file d'attente dédiée au flux sélectionné (étape 110), et une discipline de service adaptée est affectée à la file. A l'étape 111, on vérifie si la file d'attente ne dispose plus d'espace mémoire suffisant.

Si oui, un traitement approprié est exécuté à l'étape 120 pour supprimer un ou plusieurs paquets.

Sinon le paquet est placé à la fin de la file d'attente et le classificateur signale un ordonnanceur de paquets (étape 130).

L'ordonnanceur de paquets 8 choisit ensuite parmi les flux éligibles le prochain paquet à transmettre. Le paquet élu est transmis alors à l'unité de traitement TCP 14.

Génération d'accusé de réception par l'unité 14

Rappelons que l'unité de traitement TCP 14 a pour fonction de générer un accusé de réception (ACK) et de transmettre cet accusé de réception au terminal émetteur 2 indépendamment du délai de transmission du paquet dans la partie aval du réseau, de façon à asservir le débit d'émission de ce terminal 2 au débit du flux correspondant dans le régulateur de trafic 6.

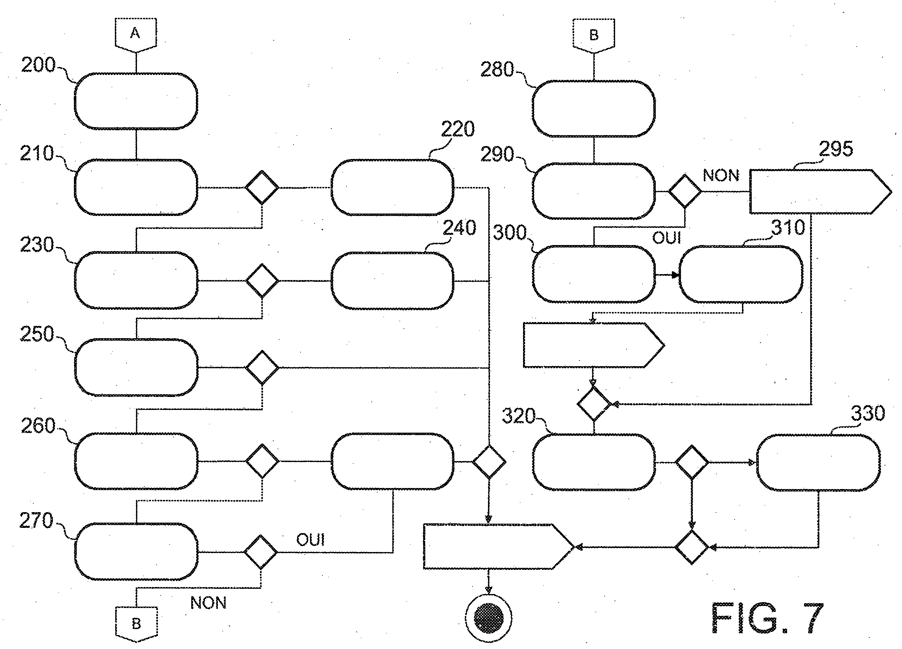

La figure 7 est un organigramme illustrant la suite des traitements appliqués au flux amont.

L'étape 200 est un démultiplexage du flux amont pour en extraire le segment, et notamment l'en-tête TCP du paquet reçu. Cette étape permet de filtrer les paquets invalides ou non TCP et dépend du niveau de traitement du régulateur 6 de trafic. En effet, si le régulateur 6 agit au niveau 2, l'étape doit d'abord extraire et vérifier un en-tête IP valide.

L'étape 210 consiste à rechercher la structure de contrôle de la connexion TCP associée au segment TCP en cours de traitement dans la mémoire 24. Cette étape peut utiliser toute structure de donnée adéquate pour effectuer une recherche exacte en fonction du quadruplet (IP adresse source, IP adresse destination, TCP port source, TCP port destination).

Si cette structure n'existe pas ou n'est pas dans l'état « établi », la phase d'établissement de la connexion n'est pas encore complète et le segment est traité à l'étape 220 selon la procédure TCP 3WHS (pour, three-way handshake). Cette procédure consiste à vérifier la validité de la procédure d'établissement, notamment les numéros de séquence SYN et ACK, et permet de stocker les options TCP négociées durant cette phase, qui impactent le mécanisme de retransmission, notamment le facteur d'échelle de fenêtre (window scale factor) pour calculer correctement la fenêtre offerte par le récepteur 4 et le support de SACK (selective acknowledgement). Si la procédure ou l'état de la connexion n'est pas jugé(e) valide, cette connexion sera ignorée et sa structure de contrôle libérée. En particulier, si l'unité de traitement 14 n'intercepte pas les deux directions d'une connexion qui utilisent des routes asymétriques, par exemple, les segments de cette connexion seront ignorés. Aucun accusé de réception anticipé ne sera généré pour un segment SYN, afin de ne pas désynchroniser l'état de la connexion dans les machines distantes.

Lorsque la connexion est dans l'état « établi », l'étape 230 consiste à vérifier la présence des drapeaux FIN et RST dans l'en-tête TCP : ceux-ci marquent la clôture de la connexion, et la structure de contrôle pourra être libérée (étape 240) dès que la file de retransmission sera vide. Les paquets amont pour la connexion seront désormais ignorés. En particulier, la méthode ne génère aucun $ACK_a$ local pour un segment FIN (ni RST), afin de ne pas désynchroniser l'état de la connexion dans les machines distantes.

Les étapes décrites ci-dessous permettent de filtrer les segments TCP à ignorer :

- L'étape 250 consiste à vérifier si la charge utile du segment TCP est nulle.
  Si oui, le segment est un $ACK_a$ pur qui ne doit pas être acquitté à son tour, et le segment est ignoré.
- L'étape 260 consiste à vérifier la somme de contrôle (checksum) du segment. Si la somme est invalide, la machine distante ignorera le segment dans la pile TCP.
  Le segment peut être ignoré ou supprimé en fonction de cette vérification.
- L'étape 270 consiste à vérifier si le segment est retransmis par le terminal émetteur 2 en comparant le numéro de séquence du dernier octet avec le prochain numéro de séquence attendu, par exemple.

Un segment retransmis par le terminal émetteur 2 doit être supprimé.

A ce niveau, le segment TCP transporte des octets que l'unité de traitement 14 n'a encore pas interceptés : le segment peut donc être transmis vers le récepteur 4.

L'étape 280 consiste à insérer une copie du segment dans la file de retransmission. Cette file est ordonnée par le numéro de séquence des octets des segments.

Si le numéro de séquence du segment n'est pas celui attendu, i.e. le segment reçu n'est pas en séquence (étape 290), un ou plusieurs segments peuvent avoir été perdus dans la partie amont du réseau. L'unité de traitement 14 transmet alors (étape 295) un acquittement dupliqué au terminal émetteur 2, c'est-à-dire exactement le même acquittement que précédemment émis.

Si l'option SACK a été négociée entre les terminaux émetteur et récepteur, cet acquittement peut contenir des étapes SACK indiquant les derniers segments reçus, conformément au standard TCP.

La pile TCP implantée dans l'émetteur 2 retransmettra les segments manquants, si cela est nécessaire, en fonction du mécanisme de retransmission négocié (SACK ou Reno).

Si le numéro de séquence du segment est celui attendu, l'unité de traitement 14 transmet un accusé de réception anticipé vers l'émetteur 2. Cet acquittement est contrefait pour être reçu et traité par l'émetteur 2 comme s'il avait été émis par le récepteur 4. En particulier, le numéro de séquence de l'acquittement est le numéro de séquence d'accusé de réception du segment amont, et le numéro de séquence d'accusé de réception couvre le dernier octet copié dans la file de retransmission.

Le problème reste donc la fenêtre de réception utilisée pour le contrôle de flux TCP. C'est la raison pour laquelle le procédé selon l'invention comporte une étape consistant à estimer le produit BDP de la valeur de la bande passante par le délai de la connexion (Bandwidth-Delay Product, BDP).

En annonçant une estimation du BDP, notée bdp_estim, dans la fenêtre de réception des segments envoyés vers l'émetteur 2 (y compris les acquittements anticipés), il est possible de contrôler la longueur des rafales (burst) émises par l'émetteur 2. Cependant il est également important de respecter la contrainte de fenêtre du récepteur 4, notée rcv_wnd, pour éviter de déborder sa mémoire tampon allouée à la connexion. La fenêtre annoncée doit enfin tenir compte du nombre d'octets non encore acquittés; que l'on note in_flight, et qui, soit circulent dans le réseau aval, soit sont stockés dans la mémoire tampon du récepteur 4.

Dans une première variante, on considère la valeur in_flight comme égale à la longueur de la file de retransmission, bien qu'il soit possible d'affiner cette estimation grâce aux procédures de détection d'erreurs et d'estimation du RTT de TCP. La fenêtre annoncée à la source TCP est alors calculée à l'étape 300 par la formule suivante :

$$adv\_wnd = \min(rcv\_wnd - in\_flight, \ bdp\_estim).$$

En dernier lieu, la fenêtre annoncée ne devrait pas occasionner de débordement de la file du flux dans le régulateur de trafic 6, pour éviter toute perte dans le système.

Préférentiellement, la taille mémoire des files d'attente du régulateur 6 n'est pas sous dimensionnée compte tenu des BDP des connexions TCP.

L'étape 310 consiste à gérer le déclenchement du comptage du temps d'attente des acquittements RTO et à estimer le RTT et le BDP en phase de transmission de segment et de réception d'acquittement (ACK). Cette étape 310 sera décrite plus en détail ci-après.

A l'étape 320 l'unité de traitement 14 compare la taille des segments acquittés à celle du MTU.

A l'étape 330, l'unité de traitement 14 fragmente les segments acquittés de façon anticipée et dont la taille est supérieure au MTU (étape 320). Cette fragmentation s'effectue au niveau de la couche IP.

Notons qu'à l'exception des paquets fragmentés, les paquets amont transmis ne subissent aucune modification des en-têtes IP. Les en-têtes TCP ne sont modifiés en aucun cas.


TRAITEMENT DES PAQUETS AVAL

Rappelons que le traitement par l'unité 14 des paquets aval consiste, d'une part, à scruter les acquittements TCP renvoyés par le récepteur 4 vers l'émetteur 2 pour détecter les segments non délivrés et retransmettre ces segments suivant les procédures standards de TCP, et d'autre part, à modifier les en-têtes TCP des segments pour contrôler le débit de l'émetteur 2.

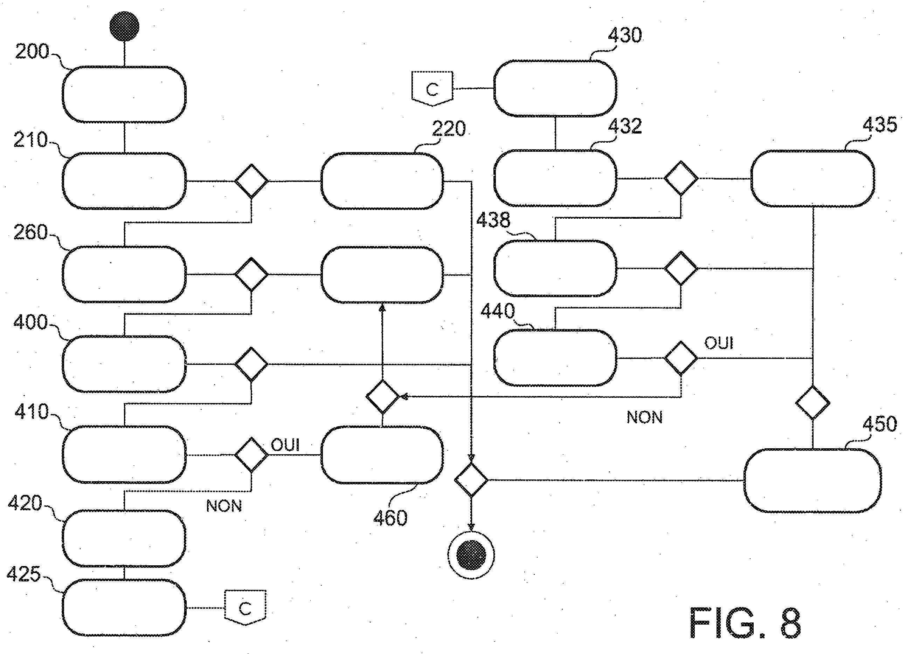

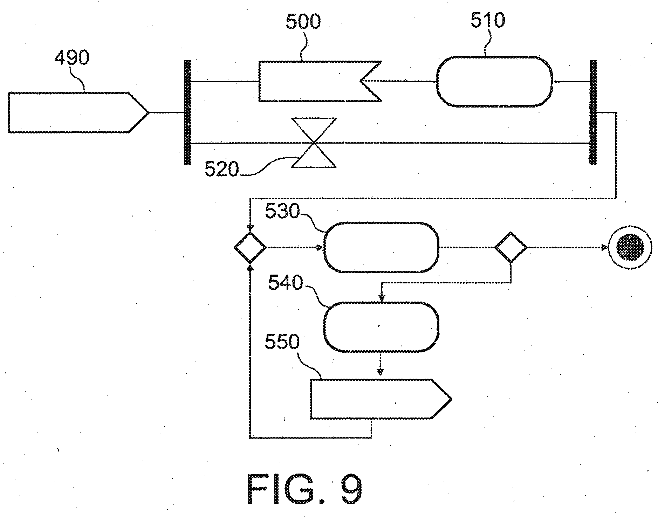

Ces traitements seront décrits en détail par référence aux figures 8 et 9.

Le traitement aval comporte les mêmes étapes 200, 210, 220 et 260 décrites dans le traitement amont visant à extraire un segment TCP et sa structure de contrôle associée en mode établi.

Dans le traitement aval, l'étape 26 consiste à vérifier la somme de contrôle (*checksum*) et à supprimer un segment dont la somme est invalide. Si la somme est valide, une vérification du drapeau ACK est effectuée à l'étape 400. Si le drapeau ACK n'est pas positionné, le segment est ignoré (en général, il s'agit d'un segment SYN de réouverture de connexion).

A partir de l'étape 410, la méthode est une version allégée du protocole TCP en mode réception, sans gestion de congestion mais uniquement avec reprise sur erreur.

L'étape 410 consiste à vérifier si l'accusé réception ACK est dupliqué, c'est-à-dire, si le récepteur 4 décale sa fenêtre de réception ou non.

L'étape 420 consiste à gérer des accusés réception ACK dupliqués selon les standards TCP New Reno et SACK, qui peut entraîner la retransmission d'un ou plusieurs segments TCP.

Cette procédure sera décrite en détail par, la suite.

Une compatibilité stricte aux standards de retransmission New Reno ou SACK garantit l'interopérabilité du système avec les piles TCP du récepteur 4 et de l'émetteur 2.

Si l'accusé réception ACK n'est pas dupliqué, la mémoire des octets acquittés par l'accusé réception ACK cumulatif est libérée de tous les octets dont le numéro de séquence est strictement inférieur au numéro d'accusé de réception reçu.

L'étape 425 consiste à estimer et gérer les délais du RTO (et RTT) ainsi que le BDP.

L'estimation du RTT peut, soit suivre le standard TCP, soit s'adapter à tout nouvel algorithme. Une implantation de la méthode peut supporter l'option *« timestamp »* pour affiner l'estimation du RTT. La gestion du temps d'attente d'acquittement RTO est conforme au standard TCP.

L'estimation du produit BDP peut s'effectuer par deux méthodes :

- Si le régulateur de trafic 6 dispose d'une interface permettant d'accéder au débit du flux correspondant à la connexion, l'unité de traitement 14 utilise cette interface pour estimer le BDP en multipliant le débit du flux, pondéré par le nombre de connexions TCP agrégées dans ce flux, par le RTT moyen.
- Sinon, le BDP peut être échantillonné en supervisant la taille de la file de retransmission. Un numéro de séquence est maintenu dans la structure de contrôle de la connexion, ainsi que le nombre d'octets transmis en aval, à l'exception des segments retransmis, jusqu'à ce que le numéro d'accusé de réception cumulatif des segments aval couvre le numéro de séquence spécifié. Le BDP est estimé comme une moyenne pondérée ou le maximum de ces nombres d'octets transmis. C'est une procédure très similaire à l'échantillonnage du RTT en l'absence de l'option *« timestamp ».*

La valeur initiale du BDP ne doit pas empêcher l'émetteur 2 de transmettre les tous premiers segments du transfert. Par exemple si le premier accusé de réception ACK anticipé positionne la fenêtre à un segment, en raison de la valeur *bdp_estim*, l'émetteur 2 ne peut pas transmettre une rafale complète si sa fenêtre de congestion initiale *(initial congestion window)* est supérieure à un segment, comme recommandée par les standards TCP.

Selon une caractéristique de l'invention, l'estimation du BDP ajoute donc un nombre fixe de segments à la valeur échantillonnée, par exemple 4 à 8 segments.

L'étape 430 consiste à mettre à jour la valeur *rcv_wnd* de la fenêtre du récepteur 4.

Comme les étapes 230 et 240 dans le traitement amont l'étape 432 consiste à vérifier la présence des drapeaux FIN et RST dans l'en-tête TCP marquant la clôture de la connexion. La structure de contrôle sera libérée à l'étape 435 dès que la file de retransmission sera vide.

L'étape 438 consiste à calculer la taille de la charge utile du segment aval.

Si cette taille est nulle, correspondant à un segment d'acquittement pur, le procédé se poursuit par l'étape 440 consistant à vérifier si le numéro d'accusé de réception ou la fenêtre ont évolués par rapport au dernier ACK envoyé.

Si tel n'est pas le cas, le segment est supprimé.

Si c'est le cas, l'émetteur 2 considèrerait le segment comme un acquittement dupliqué, ce qui fausserait sa procédure de retransmission. Dans tous les autres cas, le segment doit être transmis vers l'émetteur 2.

Cependant, pour être validé par la pile TCP de l'émetteur 2, certains champs de l'en-tête TCP sont modifiés à l'étape 450. A cet effet :

- Le numéro d'accusé de réception doit correspondre au dernier numéro d'accusé de réception des ACK anticipés générés, c'est-à-dire être plus grand ou égal à ce numéro. Sans cette modification, la pile TCP de l'émetteur 2 soit ignorerait le segment comme trop ancien (un numéro d'accusé de réception plus petit que le bord gauche de sa fenêtre) soit considérerait le segment comme un acquittement dupliqué.
- La fenêtre de réception peut être recalculée pour tenir compte des nouvelles valeurs de *bdp_estim*, *rcv_wnd* et *in_flight.*
- La somme de contrôle doit être fixée pour tenir compte des deux modifications précédentes de l'en-tête.

TRAITEMENT DES RETRANSMISSIONS TCP

Les segments retransmis doivent être soumis au régulateur de trafic 6 afin d'éviter des effets de bord de retransmission cachées sur les mécanismes de contrôle du régulateur de trafic 6 (par exemple une sous-estimation significative du trafic injecté dans le réseau en « aval »).

Le traitement des retransmissions est décrit en détail par référence à la figure 9.

Rappelons qu'une retransmission de segment peut avoir lieu selon les procédures de TCP soit après réception d'un nombre d'acquittements dupliqués supérieur à un seuil critique (généralement trois) suivant TCP New Reno ou SACK (étape 500), ce qui déclenche une procédure de « Fast Retransmit » (étape 510), soit à la suite de l'expiration de la minuterie de retransmission (étape 520), qui indique qu'aucun accusé de réception cumulatif n'a été reçu couvrant le segment transmis durant le délai imparti.

L'étape 530 consiste à renvoyer le prochain segment de la file de retransmission qui doit être retransmis. En général, le numéro d'accusé de réception doit être modifié par rapport au segment original pour refléter le dernier accusé de réception renvoyé par l'émetteur (notamment dans le cas de transfert réellement bidirectionnel entre les deux machines). Cette valeur est donc stockée dans la structure de contrôle au cours du traitement amont.

Dans une variante de mise en oeuvre du procédé selon l'invention, dans le cas d'une connexion supportant l'option « *timestamp* », la valeur des timestamp est modifiée pour mesurer le RTT même en cas de retransmission ou pour détecter une retransmission erronée.

Enfin la somme de contrôle (checksum) est fixée pour tenir compte de ces changements dans l'en-tête TCP (étape 540).

La figure 9 montre une boucle de retransmission de segment dans le cas du support de TCP SACK, qui peut déterminer que plusieurs segments ont été perdus. Il faut noter que la retransmission des segments ne fait appel à aucun mécanisme de contrôle de congestion, mais dépend uniquement de l'étage de régulation de trafic pour protéger le réseau aval.

En particulier, une fois que le régulateur 6 a émis les segments retransmis, tout nouveau segment en attente après ces segments retransmis sera émis à son tour.

Rappelons que le régulateur de trafic 6 est couplé à l'unité de traitement 14 via une interface de communication permettant d'insérer un paquet en tête de file d'attente, devant tout autre paquet en attente, sans supprimer ce paquet en cas de débordement (étape 550).

## Revendications

**1.** Procédé d'optimisation du contrôle du trafic dans un réseau de télécommunication par paquets comportant au moins un terminal émetteur (2), au moins un terminal récepteur (4), et un régulateur de trafic (6) agencé entre le terminal émetteur (2) et le terminal récepteur (4), lesdits terminaux émetteur (2) et récepteur (4) échangeant des segments de paquets de données via une liaison orientée connexion mettant en oeuvre un protocole de transport à accusé de réception, procédé dans lequel lorsqu'une connexion est établie entre les terminaux émetteur (2) et récepteur (4), les segments de paquets émis du terminal émetteur (2) vers le terminal récepteur, (4) sont interceptés au niveau du régulateur de traffic (6), un accusé de réception anticipé $ACK_a$ est généré pour simuler la réception desdits segments de paquets par le terminal récepteur (4) lorsque le régulateur de trafic (6) transmet les paquets interceptés audit terminal récepteur (4), ensuite,

- ledit accusé de réception anticipé $ACK_a$ est transmis au terminal émetteur (2) de manière à asservir le débit d'émission des segments de paquets par le terminal émetteur (2) à un débit fixé par ledit régulateur de trafic (6), procédé **caractérisé en outre en ce qu'**il comporte les étapes consistant à :
- estimer la valeur BDP représentant le produit de la bande passante disponible par le délai (RTT, Round-Trip Time) de transfert des segments de paquets entre le régulateur de trafic (6) et le terminal récepteur (4),
- calculer la valeur adv_wnd représentant la fenêtre optimale de réception par le terminal récepteur (4) des segments de paquets émis par le terminal émetteur (2) au moyen de la formule suivante :

$$\texttt{adv\_wnd = min(rcv\_wnd - pipe\_size, bdp\_estim)}$$

où,

• rcv_wnd représente une fenêtre de réception imposée par le terminal récepteur (4),

• pipe_size représente le nombre d'octets, non encore acquittés par le terminal récepteur (4), ou une estimation de ce nombre.
• bdp_estim représente la valeur estimée du produit BDP.

- transmettre au terminal émetteur (2) la valeur adv_wnd calculée de manière à contrôler la longueur des rafales émises par ledit terminal émetteur (2).

2. Procédé selon la revendications 1, dans lequel ledit accusé de réception anticipé $ACK_a$ présente un format de donnée conforme au protocole de transport mis en oeuvre entre lesdits terminaux émetteur (2) et récepteur (4) et est généré par une unité de traitement (14) associée audit régulateur de trafic (6).

3. Procédé selon la revendication 2, comportant en outre une étape consistant à transmettre un acquittement dupliqué $ACK_d$ au terminal émetteur (2) identique à l'acquittement précédemment émis si au moins un segment de paquets n'est pas reçu à sa position dans le flux de données, conformément à l'ordonnancement des paquets utilisés dans ledit protocole de transport.

4. Procédé selon la revendication 1, **caractérisé en ce qu'**il comporte en outre les étapes suivantes :

- intercepter les acquittements $ACK_r$ renvoyés du terminal récepteur (4) vers le terminal émetteur (2),
- filtrer les acquittements $ACK_r$ de manière à supprimer les acquittements qui apparaîtraient au terminal émetteur (2) comme des acquittements dupliqués d'un $ACK_a$ précédemment envoyés par l'unité de traitement (14),
- déduire à partir desdits acquittements $ACK_r$ les segments non délivrés.

5. Procédé selon les revendications 3 et 4, comportant en outre l'étape consistant à modifier par l'unité de traitement (14), les en-têtes des acquittements ACK, non supprimés pour transmettre au terminal émetteur (2) la valeur adv_wnd.

6. Procédé selon la revendication 5, dans lequel une retransmission est effectuée soit après réception d'un nombre d'acquittements dupliqués supérieur à un seuil critique prédéfini, soit à la suite de l'expiration d'un délai de retransmission prédéfini.

7. Procédé selon la revendication 6, dans lequel la retransmission d'un paquet s'effectue sous le contrôle du régulateur de trafic (6), et en ce que l'émission des paquets retransmis vers le terminal récepteur (4) s'effectue selon le débit d'émission fixé par ledit régulateur de trafic (6).

8. Procédé selon l'une des revendications 1 à 7, dans lequel les terminaux émetteur (2) et récepteur (4) communiquent selon le protocole de transport TCP.

9. Procédé selon l'une des revendications 1 à 7, dans lequel les terminaux émetteur (2) et récepteur (4) communiquent selon le protocole SCTP (Stream Control Transport Protocol).

10. Unité de traitement (14) associée à un régulateur de trafic (6) dans un réseau de télécommunication par paquets comportant au moins un terminal émetteur (2), au moins un terminal récepteur (4), ledit régulateur de trafic (6) étant agencé entre le terminal émetteur (2) et le terminal récepteur (4), lesdits terminaux émetteur (2) et récepteur (4) échangeant des segments de paquets de données via une liaison orientée connexion mettant en oeuvre un protocole de transport à accusé de réception, ladite unité (14) étant couplée au régulateur de trafic (6) via une interface de communication (12) et comporte des moyens (32) pour générer un accusé de réception anticipé $ACK_a$ simulant la réception desdits segments de paquets par le terminal récepteur (4), à l'émission desdits segments de paquets par le régulateur de trafic (6), **caractérisée en ce qu'**elle comporte en outre :

- des moyens pour estimer la valeur BDP représentant le produit de la bande passante disponible par le délai (RTT, Round-Trip Time) de transfert des segments de paquets entre le régulateur de trafic (6) et le terminal récepteur (4),
- des moyens pour calculer la valeur adv_wnd représentant la fenêtre optimale de réception par le terminal récepteur (4) des segments de paquets émis par le terminal émetteur (2) au moyen de la formule suivante :

$$adv\_wnd = \min(rcv\_wnd - pipe\_size, bdp\_estim)$$

où,

- rcv_wnd représente une fenêtre de réception imposée par le terminal récepteur (4),
- pipe_size représente le nombre d'octets non encore acquittés par le terminal récepteur (4), ou une estimation de ce nombre.
- bdp_estim représente la valeur estimée du produit BDP.

- des moyens pour transmettre au terminal émetteur (2) la valeur adv_wnd calculée de manière à contrôler la longueur des rafales émises par ledit terminal émetteur (2).

**11.** Unité de traitement selon la revendication 10, **caractérisée en ce qu'**elle comporte en outre :

- des moyens (20) pour intercepter les acquittements $ACK_r$ renvoyés du terminal récepteur (4) vers le terminal émetteur (2),
- des moyens pour déduire à partir desdits acquittements $ACK_r$ les segments non délivrés,
- des moyens (30) pour filtrer les acquittements $ACK_r$ de manière à supprimer les acquittements qui apparaîtraient au terminal émetteur (2) comme des acquittements dupliqués, d'un $ACK_a$ précédemment envoyés par l'unité de traitement (14).

**12.** Unité de traitement selon la revendication 11, **caractérisée en ce qu'**elle comporte en outre des moyens pour modifier les en-têtes des acquittements $ACK_r$ non supprimés pour transmettre au terminal émetteur (2) une valeur adv_wnd représentant la fenêtre optimale de réception par le régulateur de trafic (6) des segments de paquets émis par le terminal émetteur (2) de manière à contrôler le débit transmission et la taille des rafales émises par le terminal émetteur (2).

**13.** Programme produit pour ordinateur stocké sur une unité de traitement (14) associée à un régulateur de trafic (6) dans un réseau de télécommunication par paquet comportant au moins un terminal émetteur (2), au moins un terminal récepteur (4), ledit régulateur de trafic (6) étant agencé entre le terminal émetteur (2) et le terminal récepteur (4), lesdits terminaux émetteur (2) et récepteur (4) échangeant des segments de paquets de données via une liaison orientée connexion mettant en oeuvre un protocoles de transport à accusé de réception, ledit programme comporte des instructions pour générer un accusé de réception anticipé $ACK_a$ simulant la réception desdits segments de paquets par le terminal récepteur (4), à l'émission desdits segments de paquets par le régulateur de trafic (6), et est **caractérisé en ce qu'**il comporte en outre :

- un module pour estimer la valeur BDP représentant le produit de la bande passante disponible par le délai (RTT, Round-Trip Time) de transfert des segments de paquets entre le terminal émetteur et le terminal récepteur,
- un module pour calculer la valeur adv_wnd représentant la fenêtre optimale de réception par le terminal récepteur (4) des segments de paquets émis par le terminal émetteur (2) au moyen de la formule suivante :

$$adv\_wnd = \min(rcv\_wnd - pipe\_size, bdp\_estim)$$

où,

- rcv_wnd représente une fenêtre de réception imposée par le terminal récepteur (4),
- pipe_size représente le nombre d'octets non encore acquittés par le terminal récepteur (4), ou une estimation de ce nombre.
- bdp_estim représente la valeur estimée du produit BDP.

- un module pour transmettre au terminal émetteur (2) la valeur adv_wnd calculée de manière à contrôler la longueur des rafales émises par ledit terminal émetteur (2).

**14.** Programme produit pour ordinateur selon la revendication 13, **caractérisé en ce qu'**il comporte en outre :

- un module pour intercepter les acquittements ACK$_r$ renvoyés du terminal récepteur (4) vers le terminal émetteur (2),
- un module pour déduire à partir desdits acquittements ACK$_r$ les segments non délivrés,
- un module pour filtrer les acquittements ACK$_r$ de manière à supprimer les acquittements qui apparaîtraient au terminal émetteur (2) comme des acquittements dupliqués d'un ACK$_a$ précédemment envoyés par l'unité de traitement (14).

**15.** Programme produit pour ordinateur selon la revendication 14, **caractérisé en ce qu'**il comporte en outre un module pour modifier les en-têtes des acquittements ACK$_r$ non supprimés pour transmettre au terminal émetteur (2) une valeur adv_wnd représentant la fenêtre optimale de réception par le terminal récepteur (4) des segments de paquets émis par le terminal émetteur (2) de manière à contrôler le débit transmission et la taille des rafales émises par ce terminal émetteur (2).

**Patentansprüche**

**1.** Verfahren zum Optimieren der Steuerung des Traffics in einem Paket-Telekommunikationsnetzwerk, umfassend wenigstens ein Sendegerät (2), wenigstens ein Empfängergerät (4) und ein Traffic-Regulierungselement (6), welches zwischen dem Sendegerät (2) und dem Empfängergerät (4) angeordnet ist, wobei die Sende- (2) und Empfängergeräte (4) Segmente von Datenpaketen über einen verbindungsorientierten Anschluss austauschen, welcher ein Übertragungsprotokoll mit Empfangsbestätigung verwendet, wobei in dem Verfahren, wenn eine Verbindung zwischen den Sende- (2) und Empfängergeräten (4) hergestellt wird,
die von dem Sendegerät (2) zu dem Empfängergerät (4) ausgesendeten Paketsegmente auf Höhe des Traffic-Regulierungselements (6) abgefangen werden, eine erwartete Empfangsbestätigung ACK$_a$ erzeugt wird, um das Empfangen der Paketsegmente von dem Empfängergerät (4) zu simulieren, wenn das Traffic-Regulierungselement (6) die abgefangenen Pakete an das Empfängergerät (4) überträgt, dann

- die erwartete Empfangsbestätigung ACK$_a$ an das Sendegerät (2) übertragen wird, so dass die Senderate der Paketsegmente von dem Sendegerät (2) auf eine feste Rate durch das Traffic-Regulierungselement (6) festgelegt wird, wobei das Verfahren ferner **dadurch gekennzeichnet ist, dass** es die Schritte umfasst, welche bestehen aus:
- Schätzen des Werts BDP, welcher das Produkt aus der verfügbaren Bandbreite mit der Transferzeit (RTT, Round-Trip Time) der Paketsegmente zwischen dem Traffic-Regulierungselement (6) und dem Empfängergerät (4) repräsentiert,
- Berechnen des Werts adv_wnd, welcher das optimale Empfangsfenster durch das Empfängergerät (4) der Paketsegmente repräsentiert, welche von dem Sendegerät (2) ausgesendet werden, mittels der folgenden Formel:

$$adv\_wnd = min(rcv\_wnd - pipe\_size,\ bdp\_estim)$$

wobei

- rcv_wnd ein von dem Empfängergerät (4) vorgeschriebenes Empfangsfenster repräsentiert,
- pipe_size die Anzahl von Oktetten repräsentiert, die von dem Empfängergerät (4) noch nicht bestätigt worden sind, oder eine Schätzung dieser Anzahl,
- bdp_estim den geschätzten Wert des Produkts BDP repräsentiert,

- Übertragen des Werts adv_wnd an das Sendegerät (2), welcher derart berechnet wird, dass die Länge der von dem Sendegerät (2) ausgesendeten Impulse gesteuert wird.

**2.** Verfahren nach Anspruch 1, wobei die erwartete Empfangsbestätigung ACK$_a$ ein Datenformat aufweist, welches mit dem Übertragungsprotokoll konform ist, welches zwischen den Sende- (2) und Empfängergeräten (4) eingesetzt wird, und von einer Verarbeitungseinheit (14) erzeugt wird, welche dem Traffic-Regulierungselement (6) zugeordnet ist.

**3.** Verfahren nach Anspruch 2, ferner umfassend einen Schritt, welcher besteht aus einem Übertragen einer duplizierten Empfangsbestätigung $ACK_d$ an das Sendegerät (2), welche mit der zuvor ausgesendeten Empfangsbestätigung identisch ist, wenn wenigstens ein Paketsegment nicht an seiner Position in dem Datenstrom empfangen wird, entsprechend der Reihenfolge von Paketen, welche in dem Übertragungsprotokoll verwendet werden.

4. Verfahren nach Anspruch 1, **dadurch gekennzeichnet, dass** es ferner die folgenden Schritte umfasst:

   - Abfangen der Empfangsbestätigungen $ACK_r$, welche von dem Empfängergerät (4) zu dem Sendegerät (2) geschickt werden,
   - Filtern der Empfangsbestätigungen $ACK_r$, so dass die Empfangsbestätigungen, welche an dem Sendegerät (2) wie die duplizierten Empfangsbestätigungen eines $ACK_a$ erscheinen würden, welche zuvor gesendet wurden, von der Verarbeitungseinheit (14) gelöscht werden,
   - Ableiten der nicht zugestellten Segmente ausgehend von den Empfangsbestätigungen $ACK_r$.

5. Verfahren nach den Ansprüchen 3 und 4, ferner umfassend den Schritt, welcher besteht aus einem Modifizieren der Header der Empfangsbestätigungen $ACK_r$, welche nicht gelöscht worden sind, durch die Verarbeitungseinheit (14), um an das Sendegerät (2) den Wert adv_wnd zu übertragen.

6. Verfahren nach Anspruch 5, wobei eine Neuübertragung ausgelöst wird, entweder nach Empfang einer Anzahl von duplizierten Empfangsbestätigungen, welche größer ist als ein vordefinierter kritischer Schwellenwert, oder nach einem Verstreichen einer vordefinierten Neuübertragungszeit.

7. Verfahren nach Anspruch 6, wobei die Neuübertragung eines Pakets unter der Steuerung des Traffic-Regulierungselements (6) durchgeführt wird, und wobei das Aussenden der neu übertragenen Pakete zu dem Empfängergerät (4) gemäß der festen Senderate von dem Traffic-Regulierungselement (6) durchgeführt wird.

8. Verfahren nach einem der Ansprüche 1 bis 7, wobei die Sende- (2) und Empfängergeräte (4) gemäß dem Übertragungsprotokoll TCP kommunizieren.

9. Verfahren nach einem der Ansprüche 1 bis 7, wobei die Sende- (2) und Empfängergeräte (4) gemäß dem Protokoll SCTP (Stream Control Transport Protocol) kommunizieren.

10. Verarbeitungseinheit (14), welche einem Traffic-Regulierungselement (6) in einem Paket-Telekommunikationsnetzwerk zugeordnet ist, umfassend wenigstens ein Sendegerät (2), wenigstens ein Empfängergerät (4), wobei das Traffic-Regulierungselement (6) zwischen dem Sendegerät (2) und dem Empfängergerät (4) angeordnet ist, wobei die Sende- (2) und Empfängergeräte (4) Daten-Paketsegmente über einen verbindungsorientierten Anschluss austauschen, welcher ein Übertragungsprotokoll mit Empfangsbestätigung verwendet, welche Einheit (14) mit dem Traffic-Regulierungselement (6) über eine Kommunikationsschnittstelle (12) gekoppelt ist und Mittel (32) zum Erzeugen einer erwarteten Empfangsbestätigung $ACK_a$ umfasst, wobei das Empfangen der Paketsegmente durch das Empfängergerät (4) simuliert wird, bei Aussenden der Paketsegmente durch das Traffic-Regulierungselement (6), **dadurch gekennzeichnet, dass** sie ferner umfasst:

    - Mittel zum Schätzen des Werts BDP, welcher das Produkt aus der verfügbaren Bandbreite mit der Transferzeit (RTT, Round-Trip Time) der Paketsegmente zwischen dem Traffic-Regulierungselement (6) und dem Empfängergerät (4) repräsentiert,
    - Mittel zum Berechnen des Werts adv_wnd, welcher das optimale Empfangsfenster durch das Empfängergerät (4) der Paketsegmente repräsentiert, welche von dem Sendegerät (2) ausgesendet werden, mittels der folgenden Formel:

$$adv\_wnd = min(rcv\_wnd - pipe\_size, bdp\_estim)$$

wobei

    - rcv_wnd ein von dem Empfängergerät (4) vorgeschriebenes Empfangsfenster repräsentiert,
    - pipe_size die Anzahl von Oktetten repräsentiert, die von dem Empfängergerät (4) noch nicht bestätigt worden sind, oder eine Schätzung dieser Anzahl,
    - bdp_estim den geschätzten Wert des Produkts BDP repräsentiert,

- Mittel zum Übertragen des Werts adv_wnd an das Sendegerät (2), welcher derart berechnet wird, dass die Länge der von dem Sendegerät (2) ausgesendeten Impulse gesteuert wird.

11. Verarbeitungseinheit nach Anspruch 10, **dadurch gekennzeichnet, dass** sie ferner umfasst:

- Mittel (20) zum Abfangen der Empfangsbestätigungen $ACK_r$, welche von dem Empfängergerät (4) zu dem Sendegerät (2) geschickt werden,
- Mittel zum Ableiten der nicht zugestellten Segmente ausgehend von den Empfangsbestätigungen $ACK_r$.
- Mittel (30) zum Filtern der Empfangsbestätigungen $ACK_r$, so dass die Empfangsbestätigungen, welche an dem Sendegerät (2) wie die duplizierten Empfangsbestätigungen eines $ACK_a$ erscheinen würden, welche zuvor gesendet wurde, von der Verarbeitungseinheit (14) gelöscht werden.

12. Verarbeitungseinheit nach Anspruch 11, **dadurch gekennzeichnet, dass** sie ferner Mittel zum Modifizieren der Header der Empfangsbestätigungen $ACK_r$, welche nicht gelöscht worden sind, umfasst, um an das Sendegerät (2) einen Wert adv_wnd zu übertragen, welcher das optimale Empfangsfenster durch das Traffic-Regulierungselement (6) von Paketsegmenten repräsentiert, welche von dem Sendegerät (2) ausgesendet werden, um die Übertragungszeit und die Länge der von dem Sendegerät (2) ausgesendeten Impulse zu steuern.

13. Computer-Programmprodukt, welches auf einer Verarbeitungseinheit (14) gespeichert ist, welche einem Traffic-Regulierungselement (6) in einem Paket-Telekommunikationsnetzwerk zugeordnet ist, umfassend wenigstens ein Sendegerät (2), wenigstens ein Empfängergerät (4), wobei das Traffic-Regulierungselement (6) zwischen dem Sendegerät (2) und dem Empfängergerät (4) angeordnet ist, wobei die Sende- (2) und Empfängergeräte (4) Daten-Paketsegmente über einen verbindungsorientierten Anschluss austauschen, welcher ein Übertragungsprotokoll mit Empfangsbestätigung verwendet, welches Programm Anweisungen zum Erzeugen einer erwarteten Empfangsbestätigung $ACK_a$ umfasst, welche das Empfangen der Paketsegmente durch das Empfängergerät (4) simulieren, bei Aussenden der Paketsegmente durch das Traffic-Regulierungselement (6), und **dadurch gekennzeichnet ist, dass** es ferner umfasst:

- ein Modul zum Schätzen des Werts BDP, welcher das Produkt aus der verfügbaren Bandbreite mit der Transferzeit (RTT, Round-Trip Time) der Paketsegmente zwischen dem Traffic-Regulierungselement (6) und dem Empfängergerät (4) repräsentiert,
- ein Modul zum Berechnen des Werts adv_wnd, welcher das optimale Empfangsfenster durch das Empfängergerät (4) der Paketsegmente repräsentiert, welche von dem Sendegerät (2) ausgesendet werden, mittels der folgenden Formel:

$$adv\_wnd = min(rcv\_wnd - pipe\_size, bdp\_estim)$$

wobei

- rcv_wnd ein von dem Empfängergerät (4) vorgeschriebenes Empfangsfenster repräsentiert,
- pipe_size die Anzahl von Oktetten repräsentiert, die von dem Empfängergerät (4) noch nicht bestätigt worden sind, oder eine Schätzung dieser Anzahl,
- bdp_estim den geschätzten Wert des Produkts BDP repräsentiert,

- ein Modul zum Übertragen des Werts adv_wnd an das Sendegerät (2), welcher derart berechnet wird, dass die Länge der von dem Sendegerät (2) ausgesendeten Impulse gesteuert wird.

14. Computer-Programmprodukt nach Anspruch 13, **dadurch gekennzeichnet, dass** es ferner umfasst:

- ein Modul zum Abfangen der Empfangsbestätigungen $ACK_r$, welche von dem Empfängergerät (4) zu dem Sendegerät (2) geschickt werden,
- ein Modul zum Ableiten der nicht zugestellten Segmente ausgehend von den Empfangsbestätigungen $ACK_r$.
- ein Modul zum Filtern der Empfangsbestätigungen $ACK_r$, so dass die Empfangsbestätigungen, welche an dem Sendegerät (2) wie die duplizierten Empfangsbestätigungen eines $ACK_a$ erscheinen würden, welche zuvor gesendet wurden, von der Verarbeitungseinheit (14) gelöscht werden.

**15.** Computer-Programmprodukt nach Anspruch 14, **dadurch gekennzeichnet, dass** es ferner ein Modul zum Modifizieren der Header der Empfangsbestätigungen $ACK_r$, welche nicht gelöscht worden sind, umfasst, um an das Sendegerät (2) einen Wert adv_wnd zu übertragen, welcher das optimale Empfangsfenster durch das Empfängergerät (4) von Paketsegmenten repräsentiert, welche von dem Sendegerät (2) ausgesendet werden, um die Übertragungszeit und die Länge der von dem Sendegerät (2) ausgesendeten Impulse zu steuern.

**Claims**

**1.** A process for optimizing of the control of the traffic in a packet telecommunications network comprising at least one transmitter terminal (2), at least one receiver terminal (4), and a traffic regulator (6) arranged between the transmitter terminal (2) and the receiver terminal (4), said transmitter (2) and receiver (4) terminals exchanging data packet segments via a connection-oriented link employing a transport protocol with acknowledgement of receipt, process in which when a connection is made between the transmitter (2) and receiver (4) terminals,

the packet segments sent from the transmitter terminal (2) to the receiver terminal (4) are intercepted at the level of the traffic regulator (6), an anticipated acknowledgement of receipt $ACK_a$ is generated to simulate receipt of said packet segments by the receiver terminal (4) when the traffic regulator (6) transmits the intercepted packets to said receiver terminal (4), then,

- said anticipated acknowledgement of receipt $ACK_a$ is transmitted to the transmitter terminal (2) so as to slave the sending rate of the packet segments by the transmitter terminal (2) at a rate fixed by said traffic regulator (6), a process further **characterised in that** it comprises the steps consisting of:
- estimating the value BDP representing the product of the bandwidth available by the transfer period (RTT, Round-Trip Time) of the packet segments between the traffic regulator (6) and the receiver terminal (4),
- calculating the value adv_wnd representing the optimal receiving window by the receiver terminal (4) of the packet segments sent by the transmitter terminal (2) by means of the following formula:

$$adv\_wnd = min(rcv\_wnd - pipe\_size, bdp\_estim)$$

where,

- rcv_wnd illustrates a receipt window imposed by the receiver terminal (4),
- pipe_size illustrates the number of octets not yet acknowledged by the receiver terminal (4), or an estimation of this number.
- bdp_estim illustrates the estimated value of the product BDP.

- transmitting to the transmitter terminal (2) the calculated value adv_wnd so as to control the length of the bursts sent by said transmitter terminal (2).

**2.** The process according to claim 1, in which said anticipated acknowledgement of receipt $ACK_a$ presents a data format conforming to the transport protocol employed between said transmitter (2) and receiver (4) terminals and is generated by a processing unit (14) connected to said traffic regulator (6).

**3.** The process according to claim 2, further comprising a step consisting of transmitting a duplicated acknowledgement $ACK_d$ to the transmitter terminal (2) identical to the acknowledgement previously sent if at least one segment of packets is not received at its position in the data flow, conforming to the ordering of the packets utilised in said transport protocol.

**4.** The process according to claim 1, **characterised in that** it further comprises the following steps:

- intercepting the acknowledgements $ACK_r$ sent from the receiver terminal (4) to the transmitter terminal (2),
- filtering the acknowledgements $ACK_r$ so as to delete the acknowledgements which would appear at the transmitter terminal (2) as duplicated acknowledgements of an $ACK_a$ previously sent by the processing unit (14),
- deducing from said acknowledgements $ACK_r$ the non-delivered segments.

**5.** The process according to claims 3 and 4, further comprising the step consisting of modifying by the processing unit (14) the headers of the acknowledgements $ACK_r$ not deleted for transmitting to the transmitter terminal (2) the value adv_wnd.

6. The process according to claim 5, in which retransmission is carried out either after receipt of a number of duplicated acknowledgements greater than a predefined critical threshold, or following expiration of a predefined retransmission period.

7. The process according to claim 6, in which retransmission of a packet is carried out under the control of the traffic regulator (6), and in that the sending of retransmitted packets to the receiver terminal (4) is carried out according to the sending rate fixed by said traffic regulator (6).

8. The process according to any one of claims 1 to 7, in which the transmitter (2) and receiver (4) terminals communicate according to the transport TCP protocol.

9. The process according to any one of claims 1 to 7, in which the transmitter (2) and receiver (4) terminals communicate according to the protocol SCTP (Stream Control Transport Protocol).

10. A processing unit (14) associated with a traffic regulator (6) in a packet telecommunications network comprising at least one transmitter terminal (2), at least one receiver terminal (4), said traffic regulator (6) being arranged between the transmitter terminal (2) and the receiver terminal (4), said transmitter (2) and receiver (4) terminals exchanging data packet segments via a connection-oriented link employing a transport protocol with acknowledgement of receipt, said unit (14) being coupled to the traffic regulator (6) via a communications interface (12) and comprises means (32) for generating an anticipated acknowledgement of receipt $ACK_a$ simulating the receipt of said packet segments by the receiver terminal (4), on sending said packet segments by the traffic regulator (6), **characterised in that** it further comprises

   - means for estimating the value BDP representing the product of the bandwidth available by the transfer period (RTT, Round-Trip Time) of the packet segments between the traffic regulator (6) and the receiver terminal (4),
   - means for calculating the value adv_wnd representing the optimal receiving window by the receiver terminal (4) of the packet segments sent by the transmitter terminal (2) by means of the following formula:

$$adv\_wnd = min(rcv\_wnd - pipe\_size, bdp\_estim)$$

   where,

   - rcv_wnd illustrates a receipt window imposed by the receiver terminal (4),
   - pipe_size illustrates the number of octets not yet acknowledged by the receiver terminal (4), or an estimation of this number.
   - bdp_estim illustrates the estimated value of the product BDP.

   - means for transmitting to the transmitter terminal (2) the calculated value adv_wnd so as to control the length of the bursts sent by said transmitter terminal (2).

11. The processing unit according to claim 10, **characterised in that** it further comprises:

   - means (20) for intercepting the acknowledgements $ACK_r$ sent from the receiver terminal (4) to the transmitter terminal (2),
   - means for deducing the non-delivered segments from said acknowledgements $ACK_r$,
   - means (30) for filtering the acknowledgements $ACK_r$ so as to delete the acknowledgements which would appear at the transmitter terminal (2) as duplicated acknowledgements of an $ACK_a$ previously sent by the processing unit (14).

12. The processing unit according to claim 11, **characterised in that** it further comprises means for modifying the headers of the acknowledgements $ACK_r$ not deleted for transmitting to the transmitter terminal (2) a value adv_wnd representing the optimal receiving window by the traffic regulator (6) of the packet segments sent by the transmitter terminal (2) so as to control the transmission rate and the size of the bursts sent by the transmitter terminal (2).

**13.** Software loaded on a processing unit (14) associated with a traffic regulator (6) in a packet telecommunications network comprising at least one transmitter terminal (2), at least one receiver terminal (4), said traffic regulator (6) being arranged between the transmitter terminal (2) and the receiver terminal (4), said transmitter (2) and receiver (4) terminals exchanging data packet segments via a connection-oriented link employing a transport protocol with acknowledgement of receipt, said software comprises instructions for generating an anticipated acknowledgement of receipt $ACK_a$ simulating the receipt of said packet segments by the receiver terminal (4), on sending of said packet segments by the traffic regulator (6), and is **characterised in that** it further comprises:

- a module for estimating the value BDP representing the product of the bandwidth available by the transfer period (RTT, Round-Trip Time) of the packet segments between the transmitter terminal and the receiver terminal,
- a module for calculating the value adv_wnd representing the optimal receiving window by the receiver terminal (4) of the packet segments sent by the transmitter terminal (2) by means of the following formula:

$$adv\_wnd = min(rcv\_wnd - pipe\_size, bdp\_estim)$$

where,

• rcv_wnd illustrates a receipt window imposed by the receiver terminal (4),
• pipe_size illustrates the number of octets not yet acknowledged by the receiver terminal (4), or an estimation of this number.
• bdp_estim illustrates the estimated value of the product BDP.

- a module for transmitting to the transmitter terminal (2) the calculated value adv_wnd so as to control the length of the bursts sent by said transmitter terminal (2).

**14.** The software according to claim 13, **characterised in that** it further comprises:

- a module for intercepting the acknowledgements $ACK_r$ sent from the receiver terminal (4) to the transmitter terminal (2),
- a module for deducing the non-delivered segments from said acknowledgements $ACK_r$,
- a module for filtering the acknowledgements $ACK_r$ so as to delete the acknowledgements which would appear at the transmitter terminal (2) as duplicated acknowledgements of an $ACK_a$ previously sent by the processing unit (14).

**15.** The software according to claim 14, **characterised in that** it further comprises a module for modifying the headers of the acknowledgements $ACK_r$ not deleted for transmitting to the transmitter terminal (2) a value adv_wnd representing the optimal receiving window by the receiver terminal (4) of the packet segments sent by the transmitter terminal (2) so as to control the transmission rate and the size of the bursts sent by this transmitter terminal (2).

FIG. 1

EP 2 064 853 B1

FIG. 2

FIG. 3

EP 2 064 853 B1

FIG. 4

EP 2 064 853 B1

FIG. 5

FIG. 6

FIG. 7

EP 2 064 853 B1

FIG. 8

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2005005024 A1